(19) Europäisches Patentamt
European Patent Office
Office européen des brevets

(11) **EP 1 347 602 B1**

(12) **EUROPEAN PATENT SPECIFICATION**

(45) Date of publication and mention
of the grant of the patent:
**18.05.2011 Bulletin 2011/20**

(51) Int Cl.:
**H04L 12/56** (2006.01)

(21) Application number: **03006384.6**

(22) Date of filing: **20.03.2003**

(54) **Two stage egress scheduler for a network device**

Zweistufiges Einstiegsablaufsteuerung für eine Netzwerkvorrichtung

Ordonnanceur de sortie à deux étages pour un dispositif de réseau

(84) Designated Contracting States:
**DE FR GB**

(30) Priority: **20.03.2002 US 365510 P**
**20.09.2002 US 247299**

(43) Date of publication of application:
**24.09.2003 Bulletin 2003/39**

(73) Proprietor: **Broadcom Corporation**
**Irvine, CA 92617 (US)**

(72) Inventors:
• **Shankar, Laxman**
**San Jose,**
**California 95135 (US)**

• **Ambe, Shekhar**
**San Jose,**
**California 95117 (US)**

(74) Representative: **Jehle, Volker Armin et al**
**Bosch Jehle Patentanwaltsgesellschaft mbH**
**Flüggenstrasse 13**
**80639 München (DE)**

(56) References cited:
**EP-A- 0 981 228     EP-A- 1 093 266**
**WO-A-01/24428     WO-A-02/13446**

**Description**

BACKGROUND OF THE INVENTION

FIELD OF INVENTION

The present invention relates to network devices, including switches, routers and bridges, which allow for data to be routed and moved in computing networks. More specifically, the present invention provides for a two stage egress scheduler for assisting in the flow of data to the egress port of a network device and a network device having such a scheduler.

DESCRIPTION OF RELATED ART

In computer networks, each element of the network performs functions that allow for the network as a whole to perform the tasks required of the network. One such type of element used in computer networks is referred to, generally, as a switch. Switches, as they relate to computer networking and to Ethernet, are hardware-based devices that control the flow of data packets or cells based upon destination address information, which is available in each packet or cell. A properly designed and implemented switch should be capable of receiving a packet and switching the packet to an appropriate output port at what is referred to wirespeed or linespeed, which is the maximum speed capability of the particular network.

Basic Ethernet wirespeed is up to 10 megabits per second, and Fast Ethernet is up to 100 megabits per second. Another type of Ethernet is referred to as 10 gigabit Ethernet, and is capable of transmitting data over a network at a rate of up to 10,000 megabits per second. As speed has increased, design constraints and design requirements have become more and more complex with respect to following appropriate design and protocol rules and providing a low cost, commercially viable solution.

One potential difficulty in reaching high-speed operation occurs when packets exit the network device. Packets queued up on an egress port of a network device need to be shaped and scheduled for transmission. This shaping is typically performed on a per class of service (CoS) basis. A dual leaky bucket algorithm is typically used to shape the packet stream on an egress port. The dual leaky bucket monitors at least two parameters, that are the maximum burst size (MBS) and the rate of transmission.

In a typical implementation, packets are stored in DRAM, which has higher access latency than SRAM. Packets are read into SRAM and then scheduled for transmission on the egress ports. The latency of accessing the SDRAM is hidden by using work conserving schemes to transmit packets on the egress port, but this is often inefficient. In addition, if there is flow control per CoS, Head of Line (HOL) blocking problems can occur, as explained below. These difficulties often affect the ability of a network device to provide the level of throughput desired.

As such, there is a need for an efficient and fair method of fetching and scheduling packets on to an egress port in the presence of flow control per CoS. In addition, there is a need for a method that allows for the weighting of the flows through the network device based on the number of bytes passing through and not simply the number of packets. Such a method of fetching and scheduling packets on to an egress port should also address the throughput differences of the different types of memory used in the egress port.

WO 02/13446 A2 describes a two-stage shaping and two-priority queuing allowing both shaped and unshaped virtual circuits to be provisioned in a single virtual path. For each VP a separate dynamic buffer is set up for each shaped VC and unshaped VC within the VP. The shaped cells stored in dynamic buffers are dequeued via VC scheduling (first stage shaper) to a high priority queue according to the shaped VC contracts, and the unshaped cells stored in dynamic buffers are dequeued in a round robin manner to a low priority queue. The outputs of both the high priority queue and the low priority queue are passed to a second stage shaper where cells from the high priority queue are scheduled according to the VP contract, and cells from the low priority queue are also scheduled according to the VP contract, but only when VP bandwidth is not being used by the high priority cells. In order to avoid overrunning the high priority queue in the second stage, the iPSR (peat Shaping Rate increment) of the CBR VCs in the VP is chosen to be the iSSR (Sustained Shaping Rate increment) of the VP. The iPSR of the CBR VCs in the VP can be chosen to be higher than the iSSR of the VP as long as cell loss is not experienced at the second stage caused by overrunning the high priority queue. In addition, the calculated bucket for CBR service in the first stage is made a function of the Peak Cell Rate (PCR) of the VP.

EP 0 981 228 A2 discloses a two-component bandwidth scheduler having application in multi-class digital communication systems. The method for servicing queues holding data packets for subsequent transmission to a communications link processing comprises the steps of servicing each queue by forwarding its data packets to the link at time intervals corresponding to a guaranteed service rate of the queue, provided the queue is non-empty; and, during time intervals when none of the queues have packets being forwarded to the link in conformance with the above step, servicing the queues in accordance with a proportion of idle bandwidth allocated to each queue. The method is preferably carried out by a hierarchical scheduler comprising an exhaustive scheduler servicing a plurality of lower level schedulers in accordance with non-equal priority levels assigned thereto; a non-work conserving shaper scheduler feeding the exhaustive scheduler; and a work conserving idle bandwidth scheduler feeding the exhaustive scheduler. Each queue concurrently contends for service from the shaper scheduler and the idle bandwidth schedulers. The shaper scheduler servicing the queue has a higher priority level with respect to the exhaustive scheduler than the idle bandwidth scheduler servicing the same queue. The technique distributes the idle bandwidth of the communications link in a way which is de-coupled from the guaranteed service rates of the queues, thereby providing a more efficient distribution of the total available bandwidth.

It is an object of this invention to overcome the drawbacks of the above-described conventional network devices and methods. The present invention provides for a two stage egress scheduler for data packets passing through network devices.

According to the invention, there are provided a network device for network communications as defined by independent claim 1, and a method of handling data packets in a network device as defined by independent claim 9.

Further advantageous features of the invention are defined by the dependent subclaims.

Advantageously, the prefetch scheduler may be configured to fetch packet data from a queue of a first series of queues for the particular class of service and place the packet data on a queue of a second series of queues for the particular class of service. Additionally, the prefetch scheduler may be configured to fetch packet data based on at least one fetching criterion, where that criterion may be selected such that the at least one egress port never has to wait for packet data to be fetched to the second queue.

Also, the network device may have a memory including dynamic random access memory and static random access memory wherein at least one of the at least two queues for containing packet data is configured in the dynamic random access memory. Also, the memory may further include at least one flow control bit register and wherein the scheduler may be configured to access the at least one flow control bit register to determine whether packet data should be fetched from the second queue. Also, the scheduler may be configured to fetch packet data based on at least one priority scheme, where the scheme may be at least one of a strict priority scheme, weighted round robin scheme and a weighted fair queuing scheme. Also, the scheduler may be configured to return a memory pointer position for the packet data upon request from the at least one egress port.

In other embodiments, the first and second queues may be implemented in memory and the steps of fetching at least one processed packet comprises fetching at least one processed packet from memory. Additionally, the first queue may be implemented in dynamic random access memory and the second queue may be implemented in static random access memory. Also, the at least one fetching criterion may include fetching processed packets such that the egress port never has to wait for packet data to be fetched.

Additionally, the step of fetching the at least one processed packet from the second queue may include accessing a flow control bit for the second queue and fetching the at least one processed packet from the second queue only when the flow control bit has not been set. The step of sending the at least one processed packet to an egress port of the network device may include returning a pointer location in memory to the processed packet to the egress port, accessing processed packet data at the pointer location and sending the processed packet data out through the egress port. Additionally, the fetching steps may be performed concurrently. Also, the step of fetching the at least one processed packet from the second queue based on at least one priority scheme for egress packets may comprise fetching at least one process packet based on at least one of a strict priority scheme, weighted round robin scheme and a weighted fair queuing scheme.

These and other objects of the present invention will be described in or be apparent from the following description of the preferred embodiments.

BRIEF DESCRIPTION OF THE DRAWINGS

For the present invention to be easily understood and readily practiced, preferred embodiments will now be described, for purposes of illustration and not limitation, in conjunction with the following figures:

Fig. 1 is a general block diagram of elements of an example of a network device according to the present invention;

Fig. 2 is a schematic view of the egress portion of a network device according to an existing implementation;

Fig. 3 is a schematic view of the egress portion of a network device according to one embodiment of the present invention;

Fig. 4 is a flow chart illustrating the processes carried out by the prefetch scheduler, according to one embodiment of the present invention; and

Fig. 5 is a flow chart illustrating the processes carried out by the scheduler, according to one embodiment of the present invention.

DETAILED DESCRIPTION OF PREFERRED EMBODIMENTS

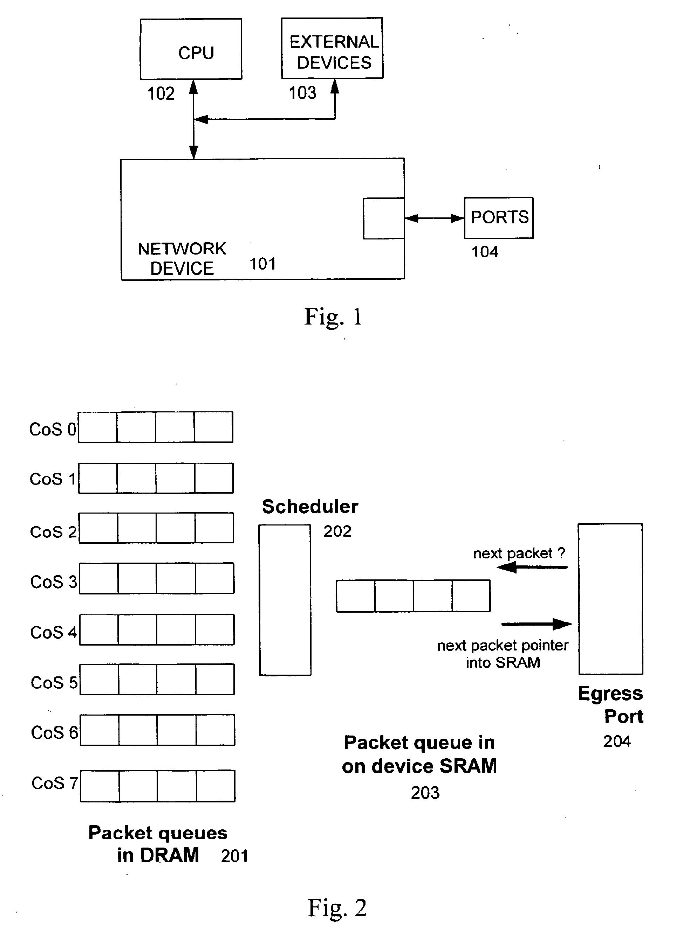

Fig. 1 illustrates a configuration of a node of the network, in accordance with the present invention. The network device 101 is connected to a Central Processing Unit (CPU) 102 and other external devices 103. The CPU can be used as necessary to program the network device 101 with rules that are appropriate to control packet processing. Ideally, the network 101 device should be able to process data received through physical ports 104 with only minimal interaction with the CPU and operate, as much as possible, in a free running manner. The present is directed to systems and processes involved in sending data processed by the network device to the egress ports to reach their respective destinations.

One implementation for egress scheduling of packets is shown in Fig. 2. In the current implementation, the scheduler 202 uses some scheduling policy like strict priority (SP), weighted round robin (WRR) or a combination to schedule packets for the egress port. In order to schedule packets for transmission, the memory management unit (MMU) transfers the next packet scheduled by the scheduler from the DRAM 201 to the on chip SRAM 203. It then queues the packet to be sent to the egress port 204 in a single queue of packet descriptors. Whenever the egress port 204 requests a packet, the next packet queued in the egress queue 203 is transmitted out.

The above scheme works if there is no per CoS flow control. The idea behind flow control is to inhibit the sending station or host from sending additional frames to a congested port for a predetermined amount of time. While this flow control can ease congestion, it also gives rise to Head Of Line (HOL) blocking. HOL blocking is a phenomenon that occurs in an input-buffered switch wherein a packet is temporarily blocked by another packet either at the input buffer or at the output buffer. In other words, packets destined for non-congested ports can be delayed because a packet is blocked in front of other packets which would otherwise not be blocked. If flow control is exerted for any CoS, head of line (HOL) blocking will result for all other CoSs, since there is only a single egress queue 203 for packets in the SRAM.

Another problem with this scheme is that multiple packets are pulled out of a page in the DRAM at a time to optimize DRAM throughput. Hence, precise implementation for a weighted fair queuing scheme is not possible. Weighted Fair Queuing (WFQ) is a technique where bandwidth is shared between CoSes to ensure fairness and parameters like information rate and maximum burst size are controlled on a per CoS basis. In a particular implementation embodiment, the traffic will be shaped through WFQ according to user specified parameters of committed information rate, peak information rate, peak burst size and committed burst size per CoS. The committed information rate is the minimum rate of data transmission for the CoS and the peak information rate is the upper bound of that rate. The other parameters relate to the burst rates of data and the above two rates. Through these parameters, the shaping of the queues of packets can be controlled and the flow can be controlled on the number of bytes for each CoS.

Yet another problem, with the single stage schedulers in current implementations, is that packets are usually scheduled at packet granularity, or based on an entire packet, as opposed to the size of packets. Even when weighted fair queuing is applied to single stage schedulers, the implementation is not usually accurate since it does not take into account the SDRAM latency. All of the above limitations are overcome by the two stage egress scheduler of the present invention.

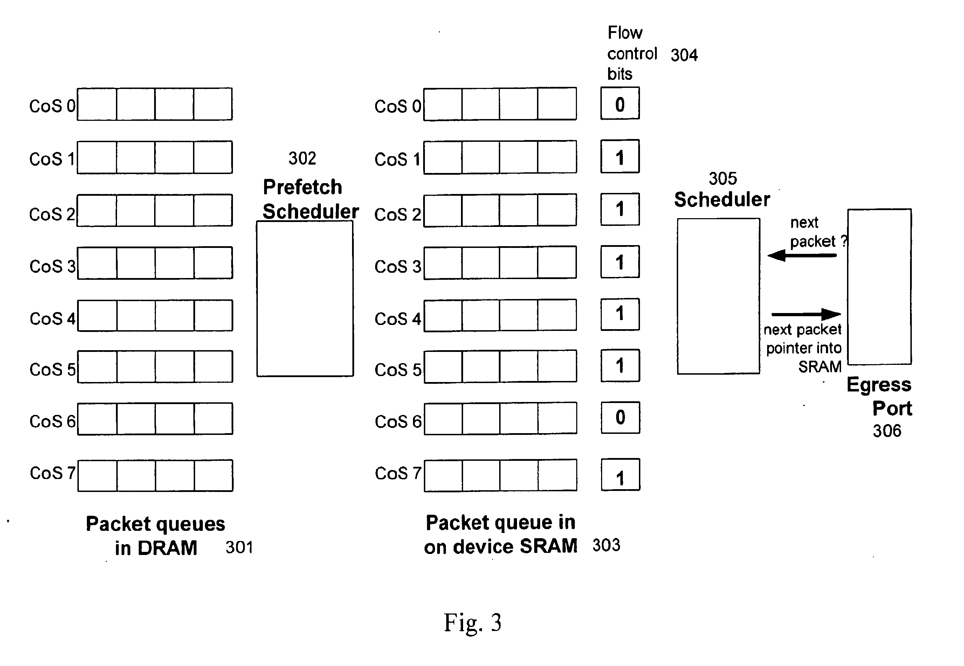

An innovative two-stage egress scheduler, according to one embodiment, is illustrated in Fig. 3. The two-stage scheduler has of a first stage, a Prefetch Scheduler (PS) 302, and a second stage, a scheduler (S) 305. The per CoS packet queues are still in the SDRAM 301. There is a set of per CoS descriptor queues in the SRAM 303. The PS 302 is responsible for transferring packets from the DRAM 301 to the SRAM 303 based on a specific policy configured for the system. This policy is independent of the scheduler's scheduling policy. Whenever the egress port 306 requests a packet, the next packet queued in the egress queues 303 is transmitted out. The scheduler responds to egress port requests by returning a pointer to the packet in SRAM whenever the egress port requests the next packet.

The Scheduler 305 can implement one of the following schemes: 1) Strict Priority (SP); 2) Weighted Round Robin (WRR), 3) SP plus WRR, and 4) Weighted Fair Queuing (WFQ). The scheduler implements a flow control mechanism overriding any of the above scheduling mechanism. There is one bit per CoS, i.e. flow control bits, as shown in Fig. 3.

A flow control bit is set to 1 when a pause message is received from a physical port for a CoS. No packets are scheduled for transmission from a CoS if the flow control bit is set to 1. When a resume message is received for a CoS, the flow control bit is set to 0.

The Prefetch Scheduler (PS) 302 is responsible for prefetching packets from the DRAM to the SRAM. One purpose of the PS 302 is to hide the latency of DRAM read access to achieve line rate egress port performance. Additionally, the PS also acts to decouple the process of fetching packets from the DRAM, thus optimizing the opening and closing of pages and at the same time achieving the fairness expected of the shaping algorithm chosen. The PS also allows packets to be prefetched into the SRAM for each CoS queue based on the scheduling policy chosen per CoS.

The number of packets fetched is chosen such that the egress port does not have to wait for a packet to be fetched from the DRAM. The worst case is when packets arrive at an egress port on a single CoS. In this case, the worst case is when there are only 64 byte (minimum size Ethernet) packets queued up and then a jumbo packet (10K byte) is fetched from the DRAM. In order to keep the egress port busy, there needs to be K packets such that:

$$\text{DRAM access time for 1 jumbo} = (K \,/\, Egress\_port\_rate), \qquad (1)$$

where Egress_port_rate is in (64 byte) packets / second.

In the other extreme case, a single jumbo packet is followed by another jumbo. Let the sum of the lengths of all prefetched, un-transmitted packets for the CoS be Lp. The next packet for a CoS is fetched from the DRAM if:

$$Lp < 2 * \text{Jumbo Packet Size} \qquad (2)$$

It is assumed that DRAM bandwidth is much greater than the Egress port bandwidth. When the scheduler schedules a packet from a CoS queue from transmission, the length of the packet is subtracted from Lp. That is,

$$Lp = Lp - \text{Tx Packet Length} \qquad (3).$$

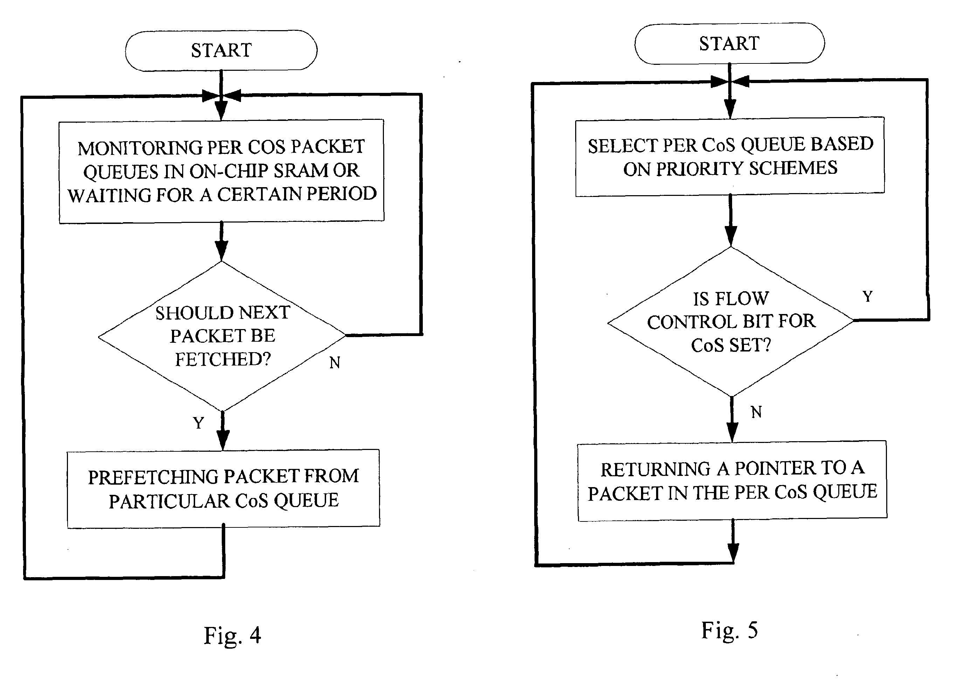

Flow charts for the processes carried out by the Prefetch Scheduler 302 and the Scheduler 305 are illustrated in Figs. 4 and 5, respectively. For the Prefetch Scheduler, the PS monitors the queues or fetches packets such that the egress port never has to wait for a packet to be fetched from the DRAM. Such a determination is applied to decide whether a next packet is to be fetched from a particular CoS queue in DRAM. For the scheduler, the scheduler looks at the control bit for a particular CoS queue selected based on a priority scheme. If the bit is not set, then a pointer is returned to the egress port for a packet in the per CoS queue. If the control bit is set, then the scheduler selects another queue based on the priority scheme.

The above process and two stage egress scheduler allows per CoS flow control to operate without causing any head of line blocking and enable a true WFQ implementation. The present invention also allows for many types of scheduling policies to be implemented and provides for an efficient compensation for the higher access latency of the DRAM used in the packet queues.

The above-discussed configuration of the invention is, in one embodiment, embodied on a semiconductor substrate, such as silicon, with appropriate semiconductor manufacturing techniques and based upon a circuit layout which would, based upon the embodiments discussed above, be apparent to those skilled in the art. A person of skill in the art with respect to semiconductor design and manufacturing would be able to implement the various modules, interfaces, and components, etc. of the present invention onto a single semiconductor substrate, based upon the architectural description discussed above. It would also be within the scope of the invention to implement the disclosed elements of the invention in discrete electronic components, thereby taking advantage of the functional aspects of the invention without maximizing the advantages through the use of a single semiconductor substrate.

In addition, while the term packet has been used in the description of the present invention, the invention has import to many types of network data. For purposes of this invention, the term packet includes packet, cell, frame, datagram, bridge protocol data unit packet, and packet data.

Although the invention has been described based upon these preferred embodiments, it would be apparent to those of skilled in the art that certain modifications, variations, and alternative constructions would be apparent, while remaining within the scope of the invention. In order to determine the metes and bounds of the invention, therefore, reference should be made to the appended claims.

**Claims**

1. A network device (101) for network communications, said network device (101) comprising:

   at least one data port interface, said at least one data port interface supporting at least one ingress data port receiving data and at least one egress port (306) transmitting data;
   a memory, said memory communicating with said at least one data port interface; and
   a memory management unit, said memory management unit including a memory interface for communicating data from said at least one data port interface and said memory;
   wherein said memory management unit comprises a scheduler (305) and a prefetch scheduler (302) and said memory comprises at least two queues (301, 303) for containing packet data, and wherein said prefetch scheduler (302) is configured to fetch packet data from a first queue (301) of said at least two queues and placing the packet data on a second queue (303) of said at least two queues (301, 303) and the scheduler (305) is configured to fetch packet data from said second queue (303) and send the packet data to the at least one egress port (306); said at least two queues (301, 303) comprise at least two series of queues, where each queue of said at least two series of queues is configured for packets having a particular class of service (CoS 0 - CoS 7); wherein said scheduler (305) is configured to fetch packet data based on at least one priority scheme;

**characterized in that**

said scheduler (305) is configured to implement a flow control mechanism overriding any priority scheme.

2. A network device as recited in claim 1, wherein said prefetch scheduler (302) is configured to fetch packet data from a queue of a first series of queues (301) for said particular class of service (CoS 0 - CoS 7) and place said packet data on a queue of a second series of queues (303) for said particular class of service (CoS 0 - CoS 7).

3. A network device as recited in claim 1, wherein said memory comprises at least one flow control bit register, and wherein the scheduler (305) is configured to access the at least one flow control bit (304) register to determine whether packet data should be fetched from said second queue (303).

4. A network device as recited in claim 1, wherein said at least one priority scheme comprises at least one of a strict priority scheme, weighted round robin scheme and a weighted fair queuing scheme.

5. A network device as recited in claim 1, wherein said prefetch scheduler (302) is configured to fetch packet data based on at least one fetching criterion.

6. A network device as recited in claim 5, wherein said prefetch scheduler (302) is configured such that at least one fetching criterion is selected such that the at least one egress port (306) does not have to wait for packet data to be fetched to said second queue (303).

7. A network device as recited in claim 1, wherein said memory comprises dynamic random access memory and static random access memory, and wherein at least one of said at least two queues (301) for containing packet data is configured in the dynamic random access memory.

8. A network device as recited in claim 1, wherein scheduler (305) is configured to return a memory pointer position for the packet data upon request from the at least one egress port (306).

9. A method of handling data packets in a network device (101), said method comprising:

placing packets into a first queue (301);
fetching at least one packet from said first queue (301) based on at least one fetching criterion;
placing said at least one packet into a second queue (303) ;
fetching by a scheduler (305) said at least one packet from said second queue (303) based on at least one priority scheme for egress packets;
sending the at least one packet to an egress port (306) of the network device (101);
each of the first and the second queues (301, 303) is associated with a particular class of service (CoS 0 - CoS 7);

**characterized in that**:

said scheduler (305) implements a flow control mechanism that overrides any priority scheme.

10. A method as recited in claim 9, wherein said first and second queues (301, 303) are implemented in memory and said steps of fetching at least one packet comprises fetching at least one packet from memory.

11. A method as recited in claim 10, wherein said first queue (301) is implemented in dynamic random access memory and said second queue (303) is implemented in static random access memory.

12. A method as recited in claim 9, wherein said step of fetching said at least one packet from said second queue (303) comprises:

accessing a flow control bit for said second queue (303) ; and

fetching said at least one packet from said second queue (303) only when said flow control bit has not been set.

13. A method as recited in claim 9, wherein step of sending the at least one packet to an egress port (306) of the network device (101) comprises:

returning a pointer location in memory to said packet to said egress port (306); accessing packet data at the pointer location; and sending said packet data out through the egress port (306).

14. A method as recited in claim 9, wherein said step of fetching at least one packet from said first queue (301) based on at least one fetching criterion comprises fetching packets such that the egress port (306) never has to wait for packet data to be fetched.

15. A method as recited in claim 9, wherein said fetching steps are performed concurrently.

16. A method as recited in claim 9, wherein said step of fetching said at least one processed packet from said second queue (303) based on at least one priority scheme for egress packets comprises fetching at least one process packet based on at least one of a strict priority scheme, weighted round robin scheme and a weighted fair queuing scheme.

**Patentansprüche**

1. Netzwerk-Vorrichtung (101) für Netzwerk-Kommunikationen, wobei die Netzwerk-Vorrichtung (101) aufweist:

wenigstens eine Datenport-Schnittstelle, wobei die wenigstens eine Datenport-Schnittstelle wenigstens einen Eingangsdatenport unterstützt, der Daten empfängt, und wenigstens einen Ausgangsport (306), der Daten sendet;
einen Speicher, wobei der Speicher mit der wenigstens einen Datenport-Schnittstelle kommuniziert; und
eine Speicherverwaltungseinheit, wobei die Speicherverwaltungseinheit eine Speicherschnittstelle zum Kommunizieren von Daten von der wenigstens einen Datenport-Schnittstelle und dem Speicher aufweist;
wobei die Speicherverwaltungseinheit einen Scheduler (305) und einen Prefetch Scheduler (302) aufweist und der Speicher wenigstens zwei Warteschlangen (301, 303) zum Enthalten von Paketdaten aufweist, und wobei der Prefetch Scheduler (302) so konfiguriert ist, dass er Paketdaten aus einer ersten Warteschlange (301) der wenigstens zwei Warteschlangen abholt und die Paketdaten in eine zweite Warteschlange (303) der wenigstens zwei Warteschlangen (301, 303) platziert, und wobei der Scheduler (305) so konfiguriert ist, dass er Paketdaten aus der zweiten Warteschlange (303) abholt und die Paketdaten an den wenigstens einen Ausgangsport (306) sendet;
wobei die wenigstens zwei Wartschlangen (301, 303) wenigstens zwei Reihen von Warteschlangen aufweisen, wobei jede Warteschlange der wenigstens zwei Reihen von Warteschlangen für Pakete konfiguriert ist, die eine bestimmte Benutzerklasse (CoS 0 - CoS 7) haben;
wobei der Scheduler (305) so konfiguriert ist, dass er Paketdaten basierend auf wenigstens einem Prioritätsschema abholt;

**dadurch gekennzeichnet, dass**
der Scheduler (305) so konfiguriert ist, dass er einen Ablaufsteuerungsmechanismus implementiert, der jedes Prioritätsschema außer Kraft setzt.

2. Netzwerk-Vorrichtung nach Anspruch 1, wobei der Prefetch Scheduler (302) so konfiguriert ist, dass er Paketdaten aus einer Warteschlange einer ersten Reihe von Warteschlangen (301) für die bestimmte Benutzerklasse (CoS 0 - CoS 7) abholt und die Paketdaten in eine Warteschlange einer zweiten Reihe von Warteschlangen (303) für die bestimmte Benutzerklasse (CoS 0 - CoS 7) platziert.

3. Netzwerk-Vorrichtung nach Anspruch 1, wobei der Speicher wenigstens ein Ablaufsteuerungs-Bit-Register aufweist, und wobei der Scheduler (305) so konfiguriert ist, dass er auf das wenigstens eine Ablaufsteuerungs-Bit (304) -Register zugreift, um zu ermitteln, ob Paketdaten aus der zweiten Warteschlange (303) abgeholt werden sollten.

4. Netzwerk-Vorrichtung nach Anspruch 1, wobei das wenigstens eine Prioritätsschema wenigstens eines eines strikten Prioritätsschemas, eines Weighted Round Robin (gewichtetes Reihum) Schemas und eines Weighted Fair Queuing (gewichtetes faires Einreihen) Schemas aufweist.

**5.** Netzwerk-Vorrichtung nach Anspruch 1, wobei der Prefetch Scheduler (302) so konfiguriert ist, dass er Paketdaten basierend auf wenigstens einem Abholkriterium abholt.

**6.** Netzwerk-Vorrichtung nach Anspruch 5, wobei der Prefetch Scheduler (302) so konfiguriert ist, dass wenigstens ein Abholkriterium so ausgewählt wird, dass der wenigstens eine Ausgangsport (306) nicht warten muss, dass Paketdaten aus der zweiten Warteschlange (303) abgeholt werden.

**7.** Netzwerk-Vorrichtung nach Anspruch 1, wobei der Speicher einen dynamischen Schreib-Lese-Speicher und einen statischen Schreib-Lese-Speicher aufweist, und wobei wenigstens eine der wenigstens zwei Warteschlangen (301) zum Enthalten von Paketdaten in dem dynamischen Schreib-Lese-Speicher konfiguriert ist.

**8.** Netzwerk-Vorrichtung nach Anspruch 1, wobei der Scheduler (305) so konfiguriert ist, dass er eine Speicherzeigerposition für die Paketdaten auf Anforderung von dem wenigstens einen Ausgangsport (306) zurückgibt.

**9.** Verfahren zum Handhaben von Datenpaketen in einer Netzwerk-Vorrichtung (101), wobei das Verfahren umfasst:

Platzieren von Paketen in eine erste Warteschlange (301);
Abholen wenigstens eines Pakets aus der ersten Warteschlange (301) basierend auf wenigstens einem Abholkriterium;
Platzieren des wenigstens einen Pakets in eine zweite Warteschlange (303);
Abholen, durch einen Scheduler (305), des wenigstens einen Pakets aus der zweiten Warteschlange (303) basierend auf wenigstens einem Prioritätsschema für Ausgangspakete;
Senden des wenigstens einen Pakets an einen Ausgangsport (306) der Netzwerk-Vorrichtung (101),
wobei jede der ersten und zweiten Warteschlangen (301, 303) mit einer bestimmten Dienstklasse (CoS 0 - CoS 7) assoziiert ist;

**dadurch gekennzeichnet, dass**:

der Scheduler (305) einen Ablaufsteuerungsmechanismus implementiert, der jedes Prioritätsschema außer Kraft setzt.

**10.** Verfahren nach Anspruch 9, wobei die ersten und zweiten Warteschlangen (301, 303) in einem Speicher implementiert sind und die Schritte des Abholens wenigstens eines Pakets das Abholen wenigstens eines Pakets aus dem Speicher umfassen.

**11.** Verfahren nach Anspruch 10, wobei die erste Warteschlange (301) in einem dynamischen Schreib-Lese-Speicher und die zweite Warteschlange (303) in einem statischen Schreib-Lese-Speicher implementiert sind.

**12.** Verfahren nach Anspruch 9, wobei der Schritt des Abholens des wenigstens einen Pakets aus der zweiten Warteschlange (303) umfasst:

Zugreifen auf ein Ablaufsteuerungs-Bit für die zweite Warteschlange (303); und
Abholen des wenigstens einen Pakets aus der zweiten Warteschlange (303) nur, wenn das Ablaufsteuerungs-Bit nicht gesetzt ist.

**13.** Verfahren nach Anspruch 9, wobei der Schritt des Sendens des wenigstens einen Pakets an einen Ausgangsport (306) der Netzwerk-Vorrichtung (101) umfasst:

Zurückgeben einer Zeigerstelle in dem Speicher an das Paket an den Ausgangsport (306);
Zugreifen auf Paketdaten an der Zeigerstelle; und
Aussenden der Paketdaten durch den Ausgangsport (306).

**14.** Verfahren nach Anspruch 9, wobei der Schritt des Abholens wenigstens eines Pakets aus der ersten Warteschlange (301) basierend auf wenigstens einem Abholkriterium das Abholen der Pakete so umfasst, dass der Ausgangsport (306) niemals warten muss, dass Paketdaten abgeholt werden.

**15.** Verfahren nach Anspruch 9, wobei die Schritte des Abholens gleichzeitig durchgeführt werden.

**16.** Verfahren nach Anspruch 9, wobei der Schritt des Abholens des wenigstens einen verarbeiteten Pakets aus der zweiten Warteschlange (303) basierend auf wenigstens einem Prioritätsschema für Ausgangspakete das Abholen wenigstens eines Verarbeitungspakets basierend auf wenigstens einem eines strikten Prioritätsschemas, eines Weighted Round Robin Schemas und eines Weighted Fair Queuing Schemas umfasst.

**Revendications**

**1.** Dispositif de réseau (101) pour des communications en réseau, ledit dispositif de réseau (101) comprenant :

au moins une interface de ports de données, ladite au moins une interface de ports de données supportant au moins un port d'entrée de données recevant des données et au moins un port de sortie (306) transmettant des données ;
une mémoire, ladite mémoire communiquant avec ladite au moins une interface de ports de données ; et
une uni té de gestion de mémoire, ladite unité de gestion de mémoire incluant une interface de mémoire pour communiquer des données à partir de ladite au moins une interface de ports de données et de ladite mémoire ;
dans lequel ladite unité de gestion de mémoire comprend un ordonnanceur (305) et un ordonnanceur de préextraction (302) et ladite mémoire comprend au moins deux files d'attente (301, 303) pour contenir des données en paquets, et dans lequel ledit ordonnanceur de préextraction (302) est configuré pour extraire des données en paquets d'une première file d'attente (301) desdites au moins deux files d'attente et placer les données en paquets dans une deuxième file d'attente (303) desdites au moins deux files d'attente (301, 303) et l'ordonnanceur (305) est configuré pour extraire des données en paquets de ladite deuxième file d'attente (303) et envoyer les données en paquets à l'au moins un port de sortie (306) ;
lesdites au moins deux files d'attente (301, 303) comprennent au moins deux séries de files d'attente, où chaque file d'attente desdites au moins deux séries de files d'attente est configurée pour des paquets ayant une classe de service (CoS 0 - CoS 7) particulière ;
dans lequel ledit ordonnanceur (305) est configuré pour extraire des données en paquets sur la base d'au moins un système de priorité ;

**caractérisé en ce que**
ledit ordonnanceur (305) est configuré pour mettre en oeuvre un mécanisme de contrôle de flux annulant un quelconque système de priorité.

**2.** Dispositif de réseau selon la revendication 1, dans lequel ledit ordonnanceur de préextraction (302) est configuré pour extraire des données en paquets d'une file d'attente d'une première série de files d'attente (301) pour ladite classe de service (CoS 0 - CoS 7) particulière et placer lesdites données en paquets dans une file d'attente d'une deuxième série de files d'attente (303) pour ladite classe de service (CoS 0 - CoS 7) particulière.

**3.** Dispositif de réseau selon la revendication 1, dans lequel ladite mémoire comprend au moins un registre de bits de contrôle de flux, et dans lequel l'ordonnanceur (305) est configuré pour accéder à l'au moins un registre de bits de contrôle de flux (304) pour déterminer si des données en paquets doivent être extraites de ladite deuxième file d'attente (303).

**4.** Dispositif de réseau selon la revendication 1, dans lequel ledit au moins un système de priorité comprend au moins un d'un système de priorité stricte, d'un système de permutation circulaire pondérée et d'un système de file d'attente pondérée équitable.

**5.** Dispositif de réseau selon la revendication 1, dans lequel ledit ordonnanceur de préextraction (302) est configuré pour extraire des données en paquets sur la base d'au moins un critère d'extraction.

**6.** Dispositif de réseau selon la revendication 5, dans lequel ledit ordonnanceur de préextraction (302) est configuré de telle manière qu'au moins un critère d'extraction est choisi de telle manière que l'au moins un port de sortie (306) ne doit pas attendre que des données en paquets soient extraites dans ladite deuxième file d'attente (303).

**7.** Dispositif de réseau selon la revendication 1, dans lequel ladite mémoire comprend une mémoire dynamique à accès aléatoire et une mémoire statique à accès aléatoire, et dans lequel au moins une desdites au moins deux files d'attente (301) pour contenir des données en paquets est configurée dans la mémoire dynamique à accès aléatoire.

**8.** Dispositif de réseau selon la revendication 1, dans lequel l'ordonnanceur (305) est configuré pour renvoyer une position de pointeur de mémoire pour les données en paquets à la demande de l'au moins un port de sortie (306).

**9.** Procédé de manipulation de paquets de données dans un dispositif de réseau (101), ledit procédé comprenant :

le placement de paquets dans une première file d'attente (301) ;
l'extraction d'au moins un paquet de ladite première file d'attente (301) sur la base d'au moins un critère d'extraction ;
le placement dudit au moins un paquet dans une deuxième file d'attente (303) ;
l'extraction par un ordonnanceur (305) dudit au moins un paquet de ladite deuxième file d'attente (303) sur la base d'au moins un système de priorité pour des paquets sortants ;
l'envoi de l'au moins un paquet à un port de sortie (306) du dispositif de réseau (101) ;
chacune de la première et de la deuxième files d'attente (301, 303) est associée avec une classe de service (CoS 0 - CoS 7) particulière ;

**caractérisé en ce que** :

ledit ordonnanceur (305) met en oeuvre un mécanisme de contrôle de flux qui annule un quelconque système de priorité.

**10.** Procédé selon la revendication 9, dans lequel lesdites première et deuxième files d'attente (301, 303) sont mises en oeuvre dans une mémoire et lesdites étapes d'extraction d'au moins un paquet comprennent l'extraction d'au moins un paquet de la mémoire.

**11.** Procédé selon la revendication 10, dans lequel ladite première file d'attente (301) est mise en oeuvre dans une mémoire dynamique à accès aléatoire et ladite deuxième file d'attente (303) est mise en oeuvre dans une mémoire statique à accès aléatoire.

**12.** Procédé selon la revendication 9, dans lequel ladite étape d'extraction dudit au moins un paquet de ladite deuxième file d'attente (303) comprend :

l'accès à un bit de contrôle de flux pour ladite deuxième file d'attente (303) ; et
l'extraction dudit au moins un paquet de ladite deuxième file d'attente (303) uniquement lorsque ledit bit de contrôle de flux n'a pas reçu de valeur.

**13.** Procédé selon la revendication 9, dans lequel l'étape d'envoi de l'au moins un paquet à un port de sortie (306) du dispositif de réseau (101) comprend :

le renvoi d'un emplacement de pointeur dans la mémoire pour ledit paquet audit port de sortie (306) ; l'accès à des données en paquets à l'emplacement du pointeur ; et l'envoi desdites données en paquets par l'intermédiaire du port de sortie (306).

**14.** Procédé selon la revendication 9, dans lequel ladite étape d'extraction dudit au moins un paquet de ladite première file d'attente (301) sur la base d'au moins un critère d'extraction comprend l'extraction de paquets de telle manière que le port de sortie (306) ne doit jamais attendre que des données en paquets soient extraites.

**15.** Procédé selon la revendication 9, dans lequel lesdites étapes d'extraction sont exécutées simultanément.

**16.** Procédé selon la revendication 9, dans lequel ladite étape d'extraction dudit au moins un paquet traité de ladite deuxième file d'attente (303) sur la base d'au moins un système de priorité pour des paquets sortants comprend l'extraction d'au moins un paquet traité sur la base d'au moins un d'un système de priorité stricte, d'un système de permutation circulaire pondérée et d'un système de file d'attente pondérée équitable.

Fig. 1

**Packet queues
in DRAM** 201

**Packet queue in
on device SRAM**
203

Fig. 2

Fig. 3

**Fig. 5**

Flowchart:
START → SELECT PER CoS QUEUE BASED ON PRIORITY SCHEMES → IS FLOW CONTROL BIT FOR CoS SET? — Y (loops back) / N → RETURNING A POINTER TO A PACKET IN THE PER CoS QUEUE

**Fig. 4**

Flowchart:
START → MONITORING PER COS PACKET QUEUES IN ON-CHIP SRAM OR WAITING FOR A CERTAIN PERIOD → SHOULD NEXT PACKET BE FETCHED? — N (loops back) / Y → PREFETCHING PACKET FROM PARTICULAR CoS QUEUE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0213446 A2
- EP 0981228 A2